# EUROPEAN PATENT SPECIFICATION

(11) **EP 3 168 040 B1**
(45) Date of publication and mention of the grant of the patent: **27.12.2023**
(21) Application number: 16197922.4
(22) Date of filing: 09.11.2016
(51) Int. Cl.: B32B 5/24, B32B 7/12, B32B 9/00, B32B 9/04, B32B 27/08, B32B 27/18, B32B 27/38, B32B 27/40, B32B 19/04, A62C 3/08, A62C 2/06, B32B 21/14, C09K 21/00

(54) **AIRCRAFT CABIN COMPONENT COMPRISING A FIRE-RESISTANT AVIATION LAMINATE**
FLUGZEUGKABINENKOMPONENTE MIT EINEM FEUERFESTEN LUFTFAHRTLAMINAT
COMPOSANT D'UNE CABINE D'AVION COMPRENANT UN STRATIFIÉ AVIATION RÉSISTANT AU FEU

(30) Priority: 10.11.2015 IN 3683DE2015
(43) Date of publication of application: 17.05.2017
(73) Proprietor: Goodrich Corporation, Charlotte, NC 28217-4578 (US)
(72) Inventor: CHAPMAN, Christopher L., Lanesville, IN Indiana 47136 (US); REDDY, Chana Kesava, 560048 Bangalore (IN); AGARWAL, Ashish Kumar, 560048 Bangalore (IN); PANDA, Satya Swaroop, 560048 Bangalore (IN)
(74) Representative: Dehns

(56) References cited:
- WO-A1-01/34724
- WO-A1-94/20055
- WO-A1-2004/110951
- WO-A1-2010/028352
- AT-B1- 511 676
- US-A1- 2011 283 458
- US-B1- 8 083 878

## Description

### CROSS-REFERENCE TO RELATED APPLICATIONS

This patent application claims priority to India Patent Application Serial No. 3683/DEL/2015 filed November 10, 2015.

### BACKGROUND

The present disclosure relates to laminates and, more particularly, to a fire-resistant aviation laminate used for interior cabin components in the aviation industry.

Traditional veneer systems used in aircraft interiors must undergo chemical treatment to meet fire resistant requirements of various government agencies. Known processes of treating the veneers are vary labor intensive and the effectiveness varies. Moreover, known treatment methods may not yield consistent results and some veneers may require retreatment. Yet further, known fire retardant solutions used in the chemical treatments may discolor the veneer and/or are not environmentally friendly. Alternative fire-resistant, and/or chemical friendly, materials for use in an aircraft cabin is desirable. AT 511 676 B1 and US 8 083 878 B1 disclose fire resistant laminates for aircraft interiors.

### SUMMARY

An aircraft cabin component of the present invention comprises an aviation laminate comprising an intumescent backer sheet; and a decorative sheet engaged to the intumescent backer sheet, according to claim 1.

The intumescent backer sheet is made of mineral fiber, exfoliating graphite and an organic binder.

The aviation laminate includes an adhesive layer for securing the intumescent backer sheet to the decorative sheet.

In the alternative or additionally thereto, in the foregoing embodiment, the adhesive layer includes a pressure sensitive adhesive.

In the alternative or additionally thereto, in the foregoing embodiment, the adhesive layer is one of an epoxy, a phenolic based adhesive, and a polyurethane based adhesive.

The decorative sheet is a wood veneer.

In the alternative or additionally thereto, in the foregoing embodiment, the wood veneer is between about 0.015 to 0.022 inches (0.038 and 0.056 cm) thick.

The aircraft component is selected as a cabin table top.

Alternatively, it is selected as an interior cabinetry and/or a credenza.

In the alternative or additionally thereto, in the foregoing embodiment the aviation laminate is fire-resistant and/or burn resistant.

In the alternative or additionally thereto, in the foregoing the aviation laminate is structural.

An aircraft according an embodiment includes an interior cabin including cabinetry including an aviation laminate having an intumescent backer sheet and a decorative sheet engaged to the intumescent backer sheet according to claim 1, , and wherein the laminate is fire and burn resistant.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a perspective view of an interior cabin of an aircraft utilizing the fire-resistant aviation laminate of the present disclosure; and
FIG. 2 is a perspective cross section of the aviation laminate.

### DETAILED DESCRIPTION

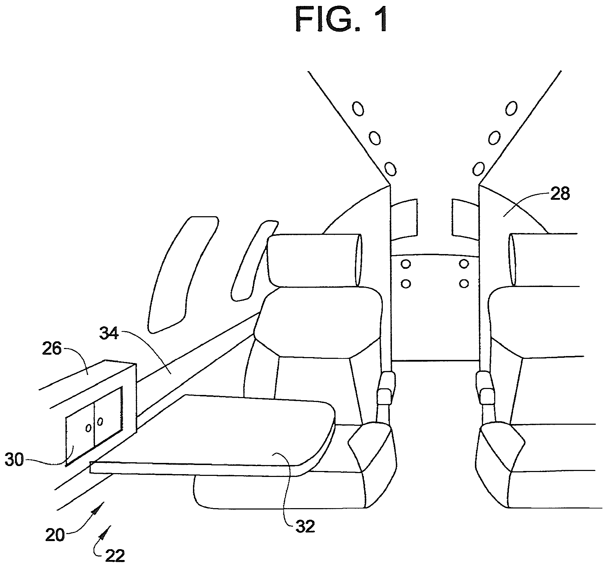

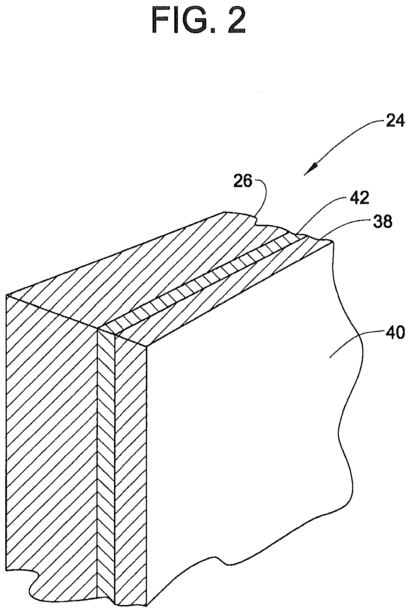

Referring to FIGS. 1 and 2, an exemplary embodiment of an interior cabin 20 of an aircraft 22 is illustrated. The aircraft 22 may be any variety of aircrafts including helicopters and airplanes that may be designed in accordance with government regulations pertaining to the propagation of cabin fire and burn characteristics of interior cabin components. In accordance with the present disclosure, the cabin components are substantially made of an aviation laminate 24. The components are selected from interior cabinetry 26, bulkheads 28 (e.g., decorative walls), not part of the present invention, doors 30, not part of the present invention, table tops 32 and credenzas 34.

The aviation laminate 24 includes an intumescent backer sheet 26 and an external sheet 38 that includes a decorative or finish surface 40. The intumescent backer sheet 26 may be rigid and structurally supportive and generally swells up (e.g., about twenty to forty times initial volume) when exposed to extreme heat, and thereby may prevent further propagation of fire. Furthermore, the intumescent feature of the backer sheet 26 not only functions as a fire stop, but may be fire resistant (i.e., fireproof) so as not to contribute toward fueling a fire. The intumescent backer sheet 26 is made of a mineral fiber, exfoliating graphite and an organic binder.

The external sheet 38 is a decorative wood veneer. The wood veneer may not include intumescent qualities, and instead may be sufficiently thin so as not to contribute toward fire propagation. As one example, the exposed face veneer may be between 0.038 and 0.056 cm (0.015 to 0.022 inches) in thickness. It is further contemplated and understood that the external sheet 38 may also include intumescent qualities.

The decorative external sheet 38 is bonded to the intumescent backer sheet 26 by an adhesive layer 42. The adhesive layer 42 may be a dry film adhesive (e.g., phenolic, epoxies, hot melt polyamide or polyurethane), a pressure sensitive adhesive, or any other variety of adhesives generally known in the art.

The aviation laminate 24 and the various cabin components substantially made of the laminate 24 are substantially fire-resistant. In contrast, more traditional cabin components typically made of wood backers (e.g., plywood) are not fire-resistant, or to facilitate passing of government/regulatory flammability tests, the plywood must undergo time consuming salt-based treatments. The overall weight with respect to volume and/or strength of the laminate 24 may be substantially less than more traditional materials, which is particularly advantageous for the aviation industry. The overall thickness of the laminate 24 may be substantially less than more traditional materials, which is also advantageous for the aviation industry.

The laminate 24 may be planar and, during manufacturing of the aforementioned cabin components, may be cut to appropriate sizes and shapes. Alternatively, the laminate 24 may have a substantially consistent thickness, however, is formed to a desired three dimensional shape during the manufacturing process of the laminate 24, itself, to conform to a particular cabin component shape or need.

The present disclosure is thus not limited to the particular examples disclosed herein, but includes all embodiments falling within the scope of the appended claims.

## Claims

1. An aircraft cabin component selected from one or more of the following: interior cabinetry, a cabin table top and/or a credenza comprising an aviation laminate wherein said laminate comprises:
an intumescent backer sheet;
an external decorative sheet engaged to the intumescent backer sheet, wherein the decorative sheet is a wood veneer; and
an adhesive layer for securing the intumescent backer sheet to the decorative sheet;
wherein the intumescent backer sheet is made of mineral fiber, exfoliating graphite and an organic binder.

2. The component set forth in claim 1, wherein the adhesive layer includes a pressure sensitive adhesive.

3. The component set forth in any preceding claim, wherein the adhesive layer is one of an epoxy, a phenolic based adhesive, and a polyurethane based adhesive.

4. The component set forth in any preceding claim, wherein the wood veneer is between 0.038 and 0.056 cm (0.015 to 0.022 inches) thick.

5. The component as claimed in any preceding claim wherein said laminate is fire-resistant and/or burn resistant.

6. The component as claimed in any preceding claim wherein said laminate is structural.

7. An aircraft comprising:
an interior cabin including an aircraft cabin component as claimed in any one of the preceding claims.

8. Use of a laminate as described in any one of claims 1 to 6 in the manufacture of an aircraft cabin component, selected from interior cabinetry, a cabin table top and/or a credenza.

## Patentansprüche

1. Flugzeugkabinenkomponente, ausgewählt aus einem oder mehreren der folgenden: Innenkabinenausstattung, einer Kabinentischplatte und/oder einer Anrichte, umfassend ein Luftfahrtlaminat, wobei das Laminat Folgendes umfasst:
eine intumeszierende Trägerfolie;
eine äußere Dekorfolie, die mit der intumeszierenden Trägerfolie in Eingriff steht, wobei die Dekorfolie ein Holzfurnier ist; und
eine Klebeschicht zum Befestigen der intumeszierenden Trägerfolie an der Dekorfolie;
wobei die intumeszierende Trägerfolie aus Mineralfasern, abblätterndem Graphit und einem organischen Bindemittel hergestellt ist.

2. Komponente nach Anspruch 1, wobei die Klebeschicht einen druckempfindlichen Klebstoff beinhaltet.

3. Komponente nach einem der vorhergehenden Ansprüche, wobei die Klebeschicht eine von einem Epoxid, einem Klebstoff auf Phenolbasis oder einem Klebstoff auf Polyurethanbasis ist.

4. Komponente nach einem der vorhergehenden Ansprüche, wobei das Holzfurnier zwischen 0,038 und 0,056 cm (0,015 bis 0,022 Zoll) dick ist.

5. Komponente nach einem der vorhergehenden Ansprüche, wobei das Laminat feuer- und/oder brennbeständig ist.

6. Komponente nach einem der vorhergehenden Ansprüche, wobei das Laminat strukturell ist.

7. Flugzeug, umfassend:
eine Innenkabine, die eine Flugzeugkabinenkomponente nach einem der vorhergehenden Ansprüche beinhaltet.

8. Verwendung eines Laminats nach einem der Ansprüche 1 bis 6 bei der Fertigung einer Flugzeugkabinenkomponente, ausgewählt aus Innenkabinenausstattung, einer Kabinentischplatte und/oder einer Anrichte.

## Revendications

1. Composant de cabine d'avion choisi parmi un ou plusieurs des éléments suivants : une armoire intérieure, un plateau de cabine et/ou une credenza comprenant un stratifié aviation dans lequel ledit stratifié comprend :
une feuille de support intumescente ;
une feuille décorative extérieure en prise avec la feuille de support intumescente, dans lequel la feuille décorative est un placage de bois ; et
une couche adhésive pour solidariser la feuille de support intumescente à la feuille décorative ;
dans lequel la feuille de support intumescente est constituée de fibres minérales, de graphite exfoliant et d'un liant organique.

2. Composant selon la revendication 1, dans lequel la couche adhésive comporte un adhésif sensible à la pression.

3. Composant selon une quelconque revendication précédente, dans lequel la couche adhésive est choisie parmi un adhésif à base d'époxy, un adhésif à base de phénolique et un adhésif à base de polyuréthane.

4. Composant selon une quelconque revendication précédente, dans lequel le placage de bois a une épaisseur comprise entre 0,038 et 0,056 cm (0,015 à 0,022 pouce).

5. Composant selon une quelconque revendication précédente, dans lequel ledit stratifié est résistant au feu et/ou résistant à la combustion.

6. Composant selon une quelconque revendication précédente, dans lequel ledit stratifié est structural.

7. Avion comprenant :
une cabine intérieure comportant un composant de cabine d'avion selon l'une quelconque des revendications précédentes.

8. Utilisation d'un stratifié tel que décrit selon l'une quelconque des revendications 1 à 6 pour la fabrication d'un composant de cabine d'avion, choisi parmi une armoire intérieure, un plateau de cabine et/ou une credenza.
